# EUROPÄISCHE PATENTSCHRIFT

(11) **EP 2 891 767 B1**
(45) Veröffentlichungstag und Bekanntmachung des Hinweises auf die Patenterteilung: **01.03.2017**
(21) Anmeldenummer: 14193975.1
(22) Anmeldetag: 20.11.2014
(51) Int. Cl.: F01D 5/22, F01D 5/26, F04D 29/32, F01D 5/28, F04D 29/02, F04D 29/54, F04D 29/66

(54) **Schaufelgitter und zugehöriges Verfahren**
Cascade and associated method
Grille d'aube et procédé associé

(30) Priorität: 16.12.2013 DE 102013226015
(43) Veröffentlichungstag der Anmeldung: 08.07.2015
(73) Patentinhaber: MTU Aero Engines AG, 80995 München (DE)
(72) Erfinder: Hartung, Andreas, 81829 München (DE)

(56) Entgegenhaltungen:
- EP-A1- 2 161 410
- EP-A1- 2 505 780
- EP-A2- 1 205 633
- EP-A2- 1 217 170

## Beschreibung

Die vorliegende Erfindung betrifft ein Schaufelgitter für eine Turbomaschine, eine Turbomaschine, insbesondere eine Gasturbine, mit einem solchen Schaufelgitter, sowie ein Verfahren zur Herstellung eines solchen Schaufelgitters.

Aus betriebsinterner Praxis ist es bekannt, insbesondere thermomechanisch hochbelastete Turbinenstufen-Laufschaufeln von Gasturbinen aus monokristallinen Werkstoffen mit vorgegebener Kristallorientierung herzustellen.

Dabei wird die Kristallorientierung hergestellter Schaufeln geprüft. Genügt diese einer vorgegebenen Tolerierung, wird die Schaufel verbaut, andernfalls verworfen. Dies führt zu einer stochastischen Verteilung der Kristallorientierungen innerhalb des Schaufelgitters. Ein Schaufelgitter nach dem Oberbegriff von Anspruch 1 ist zum Beispiel aus der EP 1 217 170 A2 bekannt.

Auf der anderen Seite ist es aus betriebsinterner Praxis bekannt, die Schaufeln eines Schaufelgitters gegeneinander zu verstimmen, insbesondere um das Schwingungsverhalten des Gitters zu verbessern. Ein Beispiel hierfür ist im der EP 2 505 780 A1 offenbart.

Eine Aufgabe einer Ausführung der vorliegenden Erfindung ist es, eine verbesserte Turbomaschine zur Verfugung zu stellen.

Diese Aufgabe wird durch ein Schaufelgitter mit den Merkmalen des Anspruchs 1 gelöst. Die Ansprüche 8 und 9 stellen eine Turbomaschine mit einem entsprechenden Schaufelgitter bzw. ein Verfahren zur Herstellung eines entsprechenden Schaufelgitters unter Schutz. Vorteilhafte Ausführungsformen der Erfindung sind Gegenstand der Unteransprüche.

Nach einem Aspekt der vorliegenden Erfindung weist eine Turbomaschine wenigstens ein Schaufelgitter auf. Die Turbomaschine ist in einer Ausführung eine Gasturbine, insbesondere eine Flugtriebwerk-Gasturbine. Das Schaufelgitter ist in einer Ausführung ein Lauf- oder Leitgitter einer Turbinen- oder Verdichterstufe der Gasturbine, insbesondere Flugtriebwerk-Gasturbine.

Das Schaufelgitter weist eine Anzahl von Schaufeln auf, die einen monokristallinen Werkstoff aufweisen. In einer Ausführung besteht das Schaufelgitter aus dieser Anzahl von Schaufeln bzw. alle Schaufeln weisen einen, vorzugsweise denselben, monokristallinen Werkstoff, auf. In einer Ausführung bestehen ein oder mehrere, insbesondere alle, Schaufeln, wenigstens im Wesentlichen, aus einem, insbesondere demselben, monokristallinen Werkstoff, in einer anderen Ausführung können auch beispielsweise nur Schaufelblätter der Schaufeln den monokristallinen Werkstoff aufweisen, insbesondere hieraus bestehen. In einer Ausführung weist der monokristalline Werkstoff eine Ni-, Fe-, Ti-, Al-, Co-, Nb- und/oder Mo-Legierung, insbesondere Superlegierung, auf, beispielsweise CMSX-2, CMSX-3, PWA 1426, PWA 1480, PWA 1484, René oder CM 186 LC oder dergleichen, oder besteht hieraus.

Jede der Schaufeln weist einen Kristallorientierungswert auf, der von einer Kristallorientierung des monokristallinen Werkstoffs dieser Schaufel abhängt, insbesondere dergleichen Kristallorientierung. Die Kristallorientierung des monokristallinen Werkstoffs im Sinne der vorliegenden Erfindung kann insbesondere von einer Abweichung einer, insbesondere dergleichen, Kristallrichtung des monokristallinen Werkstoffs von einer, insbesondere dergleichen, Profilrichtung eines Schaufelblattes der Schaufel abhängen, insbesondere diese beschreiben. Die Kristallrichtung kann insbesondere die [001]-Richtung, [100]-Richtung, [110]-Richtung, [111]-Richtung, [112]-Richtung, [123]-Richtung oder dergleichen sein, wobei die Angabe "[XYZ]" die fachüblichen Millerschen Indizes bezeichnen, die auch als "<XYZ>" angegeben werden. Die Profilrichtung kann insbesondere die radiale Richtung, die Richtung der sogenannten Stapel- bzw. Fädelachse, die Umfangsrichtung, die Richtung einer Profilsehne des Schaufelblattes oder dergleichen sein. Insbesondere kann also die Kristallorientierung im Sinne der vorliegenden Erfindung von einer Abweichung bzw. einem Winkel zwischen der [001]-Richtung des monokristallinen Werkstoffs der Schaufel und der Stapelachse des Schaufelblattes der Schaufel abhängen, insbesondere diese(n) beschreiben, die bzw. der auch als primäre Kristallorientierung bezeichnet wird. Gleichermaßen kann die Kristallorientierung insbesondere von einer Abweichung bzw. einem Winkel zwischen der [100]-Richtung des monokristallinen Werkstoffs der Schaufel und der Profilsehne des Schaufelblattes der Schaufel abhängen, insbesondere diese(n) beschreiben, die bzw. der auch als sekundäre Kristallorientierung bezeichnet wird. Der Kristallorientierungswert einer Schaufel im Sinne der vorliegenden Erfindung kann entsprechend in einer Ausführung von einer solchen Abweichung, insbesondere ihrem Betrag, abhängen, insbesondere diese(n) beschreiben. In einer Weiterbildung umfasst, insbesondere ist, der Kristallorientierungswert den/der entsprechende(n) Winkel oder dessen Betrag. Im Weiteren wird zur kompakteren Darstellung der Kristallorientierungswert mit |α| bezeichnet, wie dies insbesondere für die primäre Kristallorientierung üblich ist.

Nach einem Aspekt der vorliegenden Erfindung werden bzw. sind die Schaufeln entsprechend ihrer Kristallorientierung bzw. ihres Kristallorientierungswertes sortiert und anschließend entsprechend ihrer Kristallorientierungswerte in Sektoren des Schaufelgitters angeordnet. Auf diese Weise können insbesondere gezielt bzw. planmäßig Schaufeln ähnlicher Kristallorientierungen zusammengefasst werden bzw. sein.

Überraschenderweise hat sich gezeigt, dass hierdurch gegenüber einer rein stochastischen und somit statistisch verstimmten Verteilung der Kristallorientierungen innerhalb des Gitters insbesondere dessen Schwingungsverhalten verbessert werden kann, insbesondere in Bezug auf Resonanzen und/oder Flattern. Zusätzlich oder alternativ können so größere Toleranzen in der Kristallorientierung zugelassen werden, indem Schaufeln mit größeren Kristallorientierungswerten nicht verworfen, sondern in entsprechenden Sektoren zusammengefasst werden. Dies kann insbesondere eine Ausschussrate bei der Fertigung der Schaufeln mit monokristallinem Werkstoff und so deren Kosten reduzieren.

Das Sortieren der Schaufeln entsprechend ihrer Kristallorientierung kann insbesondere ein zerstörungsfreies Ermitteln der Kristallorientierung, beispielsweise der primären Kristallorientierung, und ein anschließendes Ordnen der Schaufeln entsprechend ihrer Kristallorientierung bzw. ihres Kristallorientierungswertes umfassen. So kann die Kristallorientierung beispielsweise mittels des Laue-Verfahrens ermittelt werden. Das Ordnen kann ein Reihen der Schaufeln nach ihren Kristallorientierungswerten, beispielsweise in aufsteigender Reihenfolge, umfassen, insbesondere sein, so dass für die gereihten Schaufeln i =1, 2, ...n gilt: |α₁| ≤ |α₂| ≤ ... ≤ |αₙ|. Gleichermaßen kann das Ordnen in einer Ausführung ein Klassieren der Schaufeln in Klassen A, B,... umfassen, insbesondere sein, so dass für die klassifizierten Schaufeln i = 1, 2, ...n gilt: i ∈ A ⇔ α_{A0} ≤ |αᵢ| ≤ α_{A1}, i ∈ B ⇔ α_{B0} ≤ |αᵢ| ≤ α_{B1}, mit den Klassengrenzen α_{A0}, α_{A1}, α_{B0}, α_{B1}, .... Innerhalb eines Sektors werden die, insbesondere gereihten, Schaufeln in ihrer Reihenfolge angeordnet.

Zur kompakteren Darstellung werden nachfolgend ohne Beschränkung der Allgemeinheit Schaufeln des Schaufelgitters, deren Kristallorientierungswert kleiner als ein erster Grenzwert ist, als erste Schaufeln bezeichnet, Schaufeln des Schaufelgitters, deren Kristallorientierungswert wenigstens gleich dem ersten Grenzwert ist, als zweite Schaufeln.

Nach einem Aspekt der vorliegenden Erfindung weist das Schaufelgitter wenigstens einen, insbesondere genau einen oder mehrere, erste Sektor(en) auf, der bzw. die aus wenigstens drei, insbesondere wenigstens vier oder wenigstens fünf, in Umfangsrichtung aufeinanderfolgenden bzw. benachbarten ersten Schaufeln besteht bzw. bestehen. Zusätzlich weist das Schaufelgitter wenigstens einen, insbesondere genau einen oder mehrere, zweite(n) Sektor(en) auf, der bzw. die aus wenigstens drei, insbesondere wenigstens vier oder wenigstens fünf, in Umfangsrichtung aufeinanderfolgenden bzw. benachbarten zweiten Schaufeln besteht bzw. bestehen. Indem die sortierten Schaufeln entsprechend ihrer Kristallorientierungswerte in Sektoren angeordnet werden bzw. sind, ergeben sich entsprechend ein oder mehrere erste und ein oder mehrere zweite Sektor(en), in denen ausschließlich erste bzw. zweite Schaufeln zusammengefasst bzw. in Umfangsrichtung aufeinanderfolgend angeordnet sind. Hierdurch können/kann, wie vorstehend erläutert, überraschenderweise das Schwingungsverhalten des Schaufelgitters verbessert und/oder Kosten reduziert werden.

In einer Ausführung kann das Schaufelgitter aus einem ersten Sektor und einem zweiten Sektor bestehen. Mit anderen Worten kann das Schaufelgitter virtuell in zwei Teile mit je wenigstens drei, insbesondere wenigstens vier oder wenigstens fünf, aufeinanderfolgenden bzw. benachbarten Schaufeln geteilt werden, wobei alle Schaufeln des einen Teils Kristallorientierungswerte aufweisen, die kleiner als ein Grenzwert sind, während alle Schaufeln des anderen, komplementären Teils Kristallorientierungswerte aufweise, die wenigstens gleich diesem Grenzwert sind. Wie nachfolgend noch naher erläutert, können mehrere solche virtuellen Teilungen möglich sein.

In entsprechender Weise kann in einer Ausführung das Schaufelgitter aus zwei oder drei, insbesondere voneinander getrennten, ersten Sektoren und zwei oder drei, insbesondere voneinander getrennten, zweiten Sektoren bestehen. Mit anderen Worten kann das Schaufelgitter virtuell in beispielsweise vier Teile mit je wenigstens drei aufeinanderfolgenden bzw. benachbarten Schaufeln geteilt werden, wobei alle Schaufeln von zwei getrennten Teilen Kristallorientierungswerte aufweisen, die kleiner als ein Grenzwert sind, während alle Schaufeln der anderen beiden getrennten Teile Kristallorientierungswerte aufweisen, die wenigstens gleich diesem Grenzwert sind.

Die Zusammenfassung von Schaufeln zu Sektoren von wenigstens drei, insbesondere wenigstens vier oder wenigstens fünf, aufeinanderfolgenden Schaufeln ähnlicher Kristallorientierung kann in einer Ausführung weiter differenziert werden bzw. sein. Insbesondere können die zweiten Schaufeln entsprechend ihrer Kristallorientierung noch weiter in erste zweite Schaufeln, deren Kristallorientierungswert wenigstens gleich dem ersten Grenzwert und zugleich kleiner als ein zweiter Grenzwert ist, und zweite zweite Schaufeln unterteilt werden, deren Kristallorientierungswert wenigstens gleich dem zweiten Grenzwert ist Zur kompakteren Darstellung werden diese zweiten zweiten Schaufeln des Schaufelgitters, nachfolgend auch kurz als dritte Schaufeln bezeichnet. Erste zweite Schaufeln und zweite zweite Schaufeln bilden somit zusammen die zweiten Schaufeln.

Entsprechend weist das Schaufelgitter in einer Ausführung wenigstens einen, insbesondere genau einen oder mehrere, erste(n) zweite(n) Sektor(en) auf, der bzw. die jeweils aus wenigstens drei, insbesondere wenigstens vier oder wenigstens fünf, in Umfangsrichtung aufeinanderfolgenden bzw. benachbarten ersten zweiten Schaufeln besteht bzw. bestehen, und wenigstens einen, insbesondere genau einen oder mehrere, zweite(n) zweite(n) bzw. dritte(n) Sektor(en), der bzw. die jeweils aus wenigstens drei, insbesondere wenigstens vier oder wenigstens fünf, in Umfangsrichtung aufeinanderfolgenden bzw. benachbarten zweiten zweiten bzw. dritten Schaufeln besteht bzw. bestehen und nachfolgend auch kurz als dritte(r) Sektor(en) bezeichnet werden bzw. wird.

In einer Ausführung kann das Schaufelgitter aus einem ersten Sektor, einem ersten zweiten Sektor und einem zweiten zweiten Sektor bestehen. Mit anderen Worten kann das Schaufelgitter virtuell in drei Teile mit je wenigstens drei, insbesondere wenigstens vier oder wenigstens fünf, aufeinanderfolgenden bzw. benachbarten Schaufeln geteilt werden, wobei alle Schaufeln des einen Teils Kristallorientierungswerte aufweisen, die kleiner als ein Grenzwert sind, alle Schaufeln eines weiteren Teils Kristallorientierungswerte aufweisen, die wenigstens gleich diesem Grenzwert und zugleich kleiner als ein weiterer Grenzwert sind, während alle Schaufeln des dritten Teils Kristallorientierungswerte aufweisen, die wenigstens gleich diesem weiteren Grenzwert sind. Gleichermaßen kann das Schaufelgitter statt einem auch zwei oder drei erste Sektoren, statt einem auch zwei oder drei erste zweite Sektoren und/oder statt einem auch zwei oder drei zweite zweite Sektoren aufweisen. Entsprechend kann das Schaufelgitter insbesondere aus zwei oder drei, insbesondere voneinander getrennten, ersten Sektoren, zwei oder drei, insbesondere voneinander getrennten, ersten zweiten Sektoren und/oder zwei oder drei, insbesondere voneinander getrennten, zweiten zweiten Sektoren bestehen.

Das Sortieren kann nach einem oder mehreren vorab vorgegebenen Grenzwerten erfolgen, so dass Schaufeln von vornherein bestimmten Sektoren zugeteilt werden können. Gleichermaßen können beispielsweise auch zunächst die Schaufeln entsprechend ihrer Kristallorientierungswerte gereiht oder klassifiziert, anschließend ein oder mehrere Grenzwerte entsprechend der Häufigkeitsverteilung der Kristallorientierungswerte vorgegeben und die Schaufeln anschließend entsprechend dieser Grenzwerte bestimmten Sektoren zugeteilt werden. Weisen beispielsweise von 90 hergestellten Schaufeln 60 Schaufeln Kristallorientierungswerte |αᵢ| < x und davon wiederum 30 Schaufeln Kristallorientierungswerte |αᵢ| < y < x auf, so kann y ein erster Grenzwert, x ein zweiter Grenzwert sein, nach dem bzw. denen die 90 Schaufeln ersten und zweiten, oder ersten und zweiten zweiten, Sektoren zugeteilt bzw. in diesen angeordnet werden.

Insbesondere, wenn Grenzwerte vorab vorgegeben werden, kann in einer Ausführung ein, insbesondere erster und/oder zweiter, Grenzwert wenigstens 10%, insbesondere wenigstens 25%, eines maximalen Kristallorientierungswertes des Schaufelgitters, insbesondere des Kristallorientierungswertes derjenigen Schaufel des Schaufelgitters mit dem größten Kristallorientierungswert unter allen Schaufeln des Schaufelgitters oder eines maximal zulässigen Kristallorientierungswertes für das Schaufelgitter betragen. Zusätzlich oder alternativ kann in einer Ausführung der, insbesondere erste und/oder zweite, Grenzwert höchstens 90%, insbesondere höchstens 75%, des maximalen Kristallorientierungswertes des Schaufelgitters betragen. Beträgt beispielsweise die primäre Kristallorientierung im Schaufelgitter maximal 15° oder ist für die primäre Kristallorientierung im Schaufelgitter eine Obergrenze von 15° vorgegeben, so kann in einer Ausführung ein erster Grenzwert 8° = 15°·53%, ein zweiter Grenzwert 12° = 15°·80% betragen.

Insbesondere, wenn Grenzwerte entsprechend der Häufigkeitsverteilung der Kristallorientierungswerte vorgegeben werden, können in einer Ausführung die Schaufeln eines ersten Sektors oder aller ersten Sektoren jeweils oder zusammen wenigstens 20%, insbesondere wenigstens 35% der Anzahl der Schaufeln des Schaufelgitters bilden. Zusätzlich oder alternativ können die Schaufeln des ersten Sektors bzw. aller ersten Sektoren jeweils oder zusammen höchstens 80%, insbesondere höchstens 65% der Anzahl der Schaufeln des Schaufelgitters bilden. Zusätzlich oder alternativ können in einer Ausführung die Schaufeln eines zweiten Sektors oder aller zweiten Sektoren, insbesondere erster und/zweiter zweiter Sektoren, jeweils oder zusammen wenigstens 20%, insbesondere wenigstens 35%, und/oder höchstens 80%, insbesondere höchstens 65% der Anzahl der Schaufeln des Schaufelgitters bilden.

Erfindungsgemäß werden innerhalb eines Sektors oder mehrerer, insbesondere aller Sektoren des Schaufelgitters die Kristallorientierungswerte der Schaufeln regelmäßig, nämlich in einer monotonen Reihenfolge angeordnet, insbesondere in Rotationsrichtung monoton zu- oder abnehmend.

Wie einleitend betont, besteht in einer Ausführung das Schaufelgitter aus den vorstehend erläuterten Sektoren, d.h. alle Schaufeln des Schaufelgitters sind zu entsprechenden Sektoren zusammengefasst. In einer anderen Ausführung kann das Schaufelgitter außer den vorstehend erläuterten Sektoren noch weitere Schaufeln aufweisen, die in einer Weiterbildung insbesondere einzeln oder paarweise zwischen ersten und zweiten Sektoren und/oder zwischen ersten und zweiten zweiten Sektoren mit je wenigstens drei, insbesondere wenigstens vier oder wenigstens fünf, Schaufeln ähnlicher Kristallorientierung angeordnet sein können. Auch hierdurch können die vorstehend erläuterten Vorteile noch, wenigstens teilweise, erreicht werden, wobei auf der anderen Seite die Flexibilität bei der Anordnung der Schaufeln vorteilhaft erhöht werden kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Verfahren zur Herstellung des Schaufelgitters der Fig. 2 nach einer Ausführung der vorliegenden Erfindung; und
- Fig. 2: ein Schaufelgitter einer Turbomaschine nach einer Ausführung der vorliegenden Erfindung.

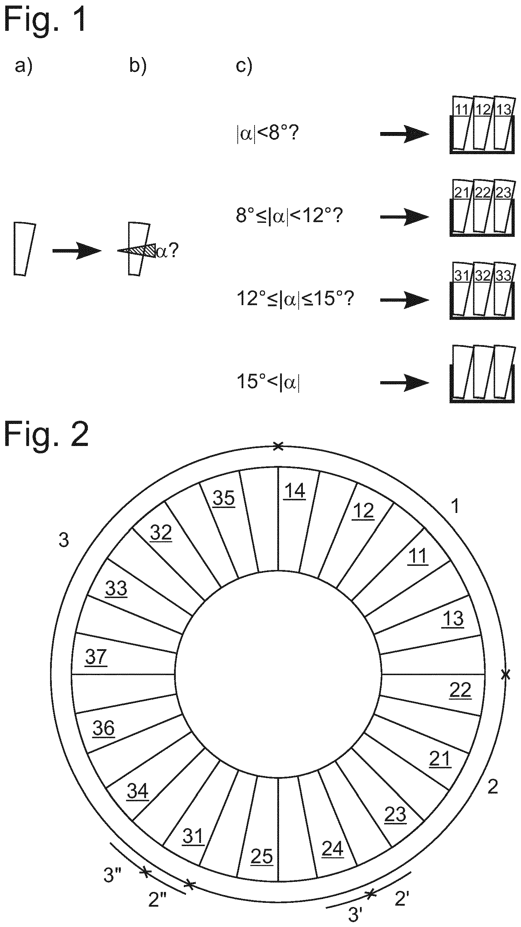

Fig. 2 zeigt ein Schaufelgitter einer Turbomaschine nach einer Ausführung der vorliegenden Erfindung in einer Axialsicht, Fig. 1, insbesondere in Zusammenschau mit Fig. 2, ein Verfahren zur Herstellung dieses Schaufelgitters.

In einem ersten, in Fig. 1a) angedeuteten Schritt werden Schaufeln aus einem monokristallinen Werkstoff hergestellt. Für die hergestellten Schaufeln wird anschließend in einem in Fig. 1b) angedeuteten Schritt der Betrag ihrer primären Kristallorientierung als Kristallorientierungswert |α| ermittelt. Anschließend werden die Schaufeln in einem in Fig. 1c) angedeuteten Schritt entsprechend ihrer Kristallorientierung bzw. ihres Kristallorientierungswertes klassifiziert: liegt ihre primäre Kristallorientierung exemplarisch unter 8°, so werden die Schaufeln einer ersten Klasse zugeteilt, die im Beispiel die Schaufeln 11, 12 und 13 enthält. Beträgt ihre primäre Kristallorientierung wenigstens 8°, liegt jedoch exemplarisch unter 12°, so werden die Schaufeln einer zweiten Klasse zugeteilt, die im Beispiel die Schaufeln 21, 22 und 23 enthält. Beträgt ihre primäre Kristallorientierung wenigstens 12° und exemplarisch höchstens 15°, so werden die Schaufeln einer dritten Klasse zugeteilt, die im Beispiel die Schaufeln 31, 32 und 33 enthält. Liegt ihre primäre Kristallorientierung über 15°, so werden die Schaufeln als Ausschuss verworfen. Insbesondere dieser Schritt stellt ein Sortieren von Schaufeln entsprechend ihrer Kristallorientierung dar.

Zu Erläuterungszwecken gilt für die Schaufeln 11,...14, 21,...25, 31,...37, aus denen das Schaufelgitter der Fig. 2 besteht: |α₁₁| ≤ |α₁₂| ≤ |α₁₃| ≤ |α₁₄| < 8° ≤ |α₂₁| ≤ |α₂₂| ≤ |α₂₃| ≤ |α₂₄| ≤ |α₂₅| < 12° ≤ |α₃₁| ≤ |α₃₂| ≤ |α₃₃| ≤ |α₃₄| ≤ |α₃₅| ≤ |α₃₆| ≤ |α₃₇| ≤ 15°.

Die solcherart sortierten Schaufeln werden entsprechend ihrer Kristallorientierungswerte in drei Sektoren 1, 2, 3 angeordnet, aus denen das Schaufelgitter der Fig. 2 besteht. Dabei werden alle ersten Schaufeln 11,...14, deren Kristallorientierungswerte |α₁ᵢ|, i = 1,...4 kleiner als ein erster Grenzwert von 8° sind, in dem ersten Sektor 1 angeordnet, alle ersten zweiten Schaufeln 21,...25, deren Kristallorientierungswerte |α₂ᵢ|, i = 1,...5 wenigstens gleich dem ersten Grenzwert und zugleich kleiner als ein zweiter Grenzwert von 12° sind, in dem ersten zweiten Sektor 2 angeordnet, und alle zweiten zweiten bzw. kurz dritten Schaufeln 31,...37, deren Kristallorientierungswerte |α₃ᵢ|, i = 1,...7 wenigstens gleich dem zweiten Grenzwert sind, in dem zweiten zweiten bzw. kurz dritten Sektor 3 angeordnet.

Innerhalb dieser Sektoren können die Schaufeln in einer nicht erfindungsgemäße Ausführungsform beliebig angeordnet werden bzw. sein, insbesondere, um das Schaufelgitter auszuwuchten. Entsprechend sind in einer nicht erfindungsgemäße Ausführungsform die Kristallorientierungswerte der Schaufeln innerhalb der Sektoren unregelmäßig angeordnet, wie durch die Reihenfolge {14,12, 11, 13; 22, 21, 23, 24, 25; 31, 34, 36, 37, 33, 32, 35} der Schaufeln in Umfangsrichtung in Fig. 2 angedeutet.

Entsprechend besteht das hergestellte Schaufelgitter der Fig. 2 aus einer Anzahl von 16 Schaufeln 14, 12, 11, 13; 22, 21, 23, 24, 25; 31, 34, 36, 37, 33, 32, 35 aus einem monokristallinen Werkstoff, wobei jede Schaufel einen Kristallorientierungswert |α| aufweist, der von ihrer primären Kristallorientierung abhängt. Dabei sind die Kristallorientierungswerte der ersten Schaufeln 11,...14 kleiner als der erste Grenzwert von 8°, und die Kristallorientierungswerte der zweiten Schaufeln 21,... 25, 31,...37 wenigstens gleich diesem ersten Grenzwert, wobei die Kristallorientierungswerte der ersten zweiten Schaufeln 21,... 25 kleiner als der zweite Grenzwert von 12° sind und die Kristallorientierungswerte der zweiten zweiten Schaufeln 31,...37 wenigstens gleich diesem zweiten Grenzwert sind.

Das Schaufelgitter besteht somit aus einem ersten Sektor 1, der aus den vier aufeinanderfolgenden ersten Schaufeln 14, 12, 11 und 13 besteht, und einem zweiten Sektor 2+3, der aus den 12 aufeinanderfolgenden zweiten Schaufeln 22, 21, 23, 2.4, 25; 31, 34, 36, 37, 33, 32 und 35 besteht. Der zweite Sektor besteht seinerseits aus einem ersten zweiten Sektor 2, der aus den fünf aufeinanderfolgenden ersten zweiten Schaufeln 22, 21, 23, 24 und 25 besteht, und einem zweiten zweiten Sektor 3, der aus den sieben aufeinanderfolgenden zweiten zweiten Schaufeln 31, 34, 36, 37, 33, 32 und 35 besteht.

Der erste Grenzwert von 8° beträgt 53% des maximalen Kristallorientierungswertes des Schaufelgitters von 15°, also wenigstens 25% und höchstens 75%. Der zweite Grenzwert von 12° beträgt 80% des maximalen Kristallorientierungswertes des Schaufelgitters von 15°, also ebenfalls wenigstens 25%, aber nur höchstens 90% des maximalen Kristallorientierungswertes des Schaufelgitters von 15°.

Die vier Schaufeln 14, 12, 11 und 13 des ersten Sektors 1 bilden 25% der Anzahl von 16 Schaufeln des Schaufelgitters, die fünf Schaufeln 22,21,23, 24 und 25 des ersten zweiten Sektors 2 bilden 31 % der Anzahl von 16, und die sieben Schaufeln 31, 34, 36, 37, 33, 32 und 35 des zweiten zweiten Sektors 3 bilden 43% der Anzahl von 16.

Obwohl in der vorhergehenden Beschreibung exemplarische Ausführungen erläutert wurden, sei darauf hingewiesen, dass eine Vielzahl von Abwandlungen möglich ist.

Man erkennt beispielsweise, dass das Schaufelgitter virtuell auch in andere Sektoren mit je wenigstens drei aufeinanderfolgenden bzw. benachbarten Schaufeln geteilt werden kann. So kann beispielsweise virtuell auch eine Einteilung in einen ersten Sektor 1 = {14, 12, 11, 13}, einen anderen ersten zweiten Sektor 2' = {22, 21, 23} und einen anderen zweiten zweiten Sektor 3' = {24,25, 31, 34, 36, 37, 33, 32, 35} erfolgen, oder gleichermaßen virtuell auch eine Einteilung in einen ersten Sektor 1 = {14, 12, 11, 13}, einen wiederum anderen ersten zweiten Sektor 2" = {22, 21, 23, 24, 25, 31} und einen wiederum anderen zweiten zweiten Sektor 3" = {34, 36, 37, 33, 32, 35}, wobei jeder dieser Sektoren wenigstens drei aufeinanderfolgende Schaufeln aufweist, deren Kristallorientierungen bzw. Kristallorientierungswerte kleiner als andere erste Grenzwerte bzw. diesen wenigstens gleich und zugleich kleiner als andere zweite Grenzwerte sind. Gleichwohl wird jeweils eine ausreichende Zusammenfassung von je wenigstens drei Schaufeln ähnlicher Kristallorientierungen dargestellt. Für die Verwirklichung der vorstehend erläuterten Merkmale reicht es im Sinne der vorliegenden Erfindung aus, wenn wenigstens eine entsprechende virtuelle Einteilung möglich ist, bei der die jeweiligen Merkmale, insbesondere in Hinblick auf Anzahl, Größe und/oder Verteilung von Schaufeln, Grenzwerten und/oder Sektoren, erfüllt ist.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: erster Sektor
- 2; 2'; 2": erster zweiter Sektor
- 3; 3'; 3": zweiter zweiter Sektor
- 11,...14: erste Schaufel
- 21,...25: erste zweite Schaufel
- 31,...37: zweite zweite Schaufel

## Patentansprüche

1. Schaufelgitter für eine Turbomaschine, mit einer Anzahl von Schaufeln (11,...14; 21,...25; 31,...37), die einen monokristallinen Werkstoff aufweisen, wobei jede Schaufel einen Kristallorientierungswert (|α|) aufweist, der von einer Kristallorientierung des monokristallinen Werkstoffs der Schaufel abhängt; und wobei die Kristallorientierungswerte erster Schaufeln (11,...14) kleiner als ein erster Grenzwert sind und die Kristallorientierungswerte zweiter Schaufeln (21,...25; 31,...37) wenigstens gleich dem ersten Grenzwert sind;
**dadurch gekennzeichnet, dass**
das Schaufelgitter
wenigstens einen ersten Sektor (1), der aus wenigstens drei aufeinanderfolgenden ersten Schaufeln (14, 12, 11, 13) besteht, und
wenigstens einen zweiten Sektor (2+3; 2'+3'; 2"+3") aufweist, der aus wenigstens drei aufeinanderfolgenden zweiten Schaufeln (22, 21, 23, 24, 25; 31, 34, 36, 37, 33, 32, 35) besteht,
wobei die Kristallorientierungswerte der Schaufeln eines Sektors regelmäßig, nämlich in einer monotonen Reihenfolge, angeordnet sind.

2. Schaufelgitter nach Anspruch 1, **dadurch gekennzeichnet, dass** das Schaufelgitter aus einem, zwei oder drei ersten Sektor(en) und einem, zwei oder drei zweiten Sektor(en) besteht.

3. Schaufelgitter nach Anspruch 1, **dadurch gekennzeichnet, dass** die Kristallorientierungswerte erster zweiter Schaufeln (21,...25) kleiner als ein zweiter Grenzwert sind und die Kristallorientierungswerte zweiter zweiter Schaufeln (31,...37) wenigstens gleich dem zweiten Grenzwert sind; und dass das Schaufelgitter wenigstens einen ersten zweiten Sektor (2; 2'; 2"), der aus wenigstens drei aufeinanderfolgenden ersten zweiten Schaufeln (22, 21, 23, 24, 25) besteht, und wenigstens einen zweiten zweiten Sektor (3; 3'; 3") aufweist, der aus wenigstens drei aufeinanderfolgenden zweiten zweiten Schaufeln (31, 34, 36, 37, 33, 32, 35) besteht.

4. Schaufelgitter nach dem vorhergehenden Anspruch, **dadurch gekennzeichnet, dass** das Schaufelgitter aus einem, zwei oder drei ersten Sektor(en), einem, zwei oder drei ersten zweiten Sektor(en) und einem, zwei oder drei zweiten zweiten Sektor(en) besteht.

5. Schaufelgitter nach einem der vorhergehenden Ansprüche, **dadurch gekennzeichnet, dass** ein Grenzwert wenigstens 10%, insbesondere wenigstens 25%, und/oder höchstens 90%, insbesondere höchstens 75% eines maximalen Kristallorientierungswertes des Schaufelgitters beträgt.

6. Schaufelgitter nach einem der vorhergehenden Anspruche, **dadurch gekennzeichnet, dass** die Schaufeln eines Sektors wenigstens 20%, insbesondere wenigstens 35%, und/oder höchstens 80%, insbesondere höchstens 65% der Anzahl der Schaufeln des Schaufelgitters bilden.

7. Schaufelgitter nach einem der vorhergehenden Ansprüche, **dadurch gekennzeichnet, dass** die Kristallorientierung des monokristallinen Werkstoffs von einer Abweichung einer Kristallrichtung, insbesondere der [001]-Richtung oder [100]-Richtung, des monokristallinen Werkstoffs von einer Profilrichtung, insbesondere einer Stapelachse oder Profilsehne, eines Schaufelblattes der Schaufel abhängt.

8. Turbomaschine, insbesondere Gasturbine, mit wenigstens einem Schaufelgitter, insbesondere einem Lauf- oder Leitgitter einer Turbinen- oder Verdichterstufe, nach einem der vorhergehenden Ansprüche.

9. Verfahren zur Herstellung eines Schaufelgitters nach einem der vorhergehenden Ansprüche, mit den Schritten:
Sortieren von Schaufeln entsprechend ihrer Kristallorientierung; und
Anordnen der sortierten Schaufeln in Sektoren entsprechend ihrer Kristallorientierungswerte,
wobei die Kristallorientierungswerte der Schaufeln eines Sektors regelmäßig, nämlich in einer monotonen Reihenfolge, angeordnet wird.

## Claims

1. A cascade for a turbomachine, comprising a number of blades (11, ... 14; 21, ... 25; 31, ... 37) having manocrystalline material, each blade having a crystal orientation value (|α|), which depends on a crystal orientation of the monocrystalline material of the blade; and wherein the crystal orientation values of the first blades (11,...14) are smaller than a first limit value, and the crystal orientation values of the second blades (21,...25; 31,...37) are at least equal to the first limit value; **characterized in that**
the cascade comprises at least one first sector (1), having at least three successive first blades (14, 12, 11, 13) and at least one second sector (2+3; 2'+3'; 2"+3"), which has at least three successive second blades (22,21,23,24,25; 31, 34,36,37, 33, 32, 35), wherein the crystal orientation values of the blades of a sector are arranged regularly, namely in a monotonous order.

2. The cascade according to Claim 1, **characterized in that** the cascade comprises one, two or three first sector(s) and one, two or three second sector(s).

3. The cascade according to Claim 1, **characterized in that** the crystal orientation values of the first second vanes (21,...25) are smaller than a second limit value, and the crystal orientation values of the second second vanes (31,...37) are at least equal to the second limit value; and that the cascade comprises at least one first second sector (2; 2'; 2"), having at least three successive first second blades (22, 21, 23, 24, 25), and at least one second second sector (3; 3'; 3") having at least three successive second second blades (31, 34, 36, 37,33, 32, 35).

4. The cascade according to the preceding Claim, **characterized in that** the cascade is comprised of one, two or three first sector(s), one, two or three first second sector(s) and one, two or three second second sector(s).

5. The cascade according to any one of the preceding Claims, **characterized in that** a limit value is at least 10%, particularly at least 25%, and/or at most 90%, particularly at most 75%, of a maximum crystal orientation value of the blade cascade.

6. The cascade according to any one of the preceding Claims, **characterized in that** the blades of a sector form at least 20%, particularly at least 35%, and/or at most 80%, particularly at most 65%, of the number of blades of the cascade.

7. The cascade according to any one of the preceding Claims, **characterized in that** the crystal orientation of the monocrystalline material is dependent on a deviation of a crystal direction, particularly the [001]- direction or [100]-direction of the monocrystalline material from a profile direction, particularly a stacking axis or chord of a turbine blade of the blade.

8. A turbomachine, particularly a gas turbine, having at least one cascade, particularly a running or guide lattice of a turbine or compressor stage, according to any one of the preceding claims.

9. A method of manufacturing a cascade according to any one of the preceding Claims, comprising the steps of:
sorting of blades according to their crystal orientation; and
lacing the sorted blades in sectors according to their crystal orientation values,
wherein the crystal orientation values of the blades of a sector are arranged regularly, namely in a monotonous order.

## Revendications

1. Grille d'aube pour une turbomachine, avec un nombre d'aubes (11, ... 14 ; 21, ... 25 ; 31, ... 37), qui présentent un matériau monocristallin, dans laquelle chaque aube présente une valeur d'orientation cristalline (|α|), qui dépend d'une orientation cristalline du matériau monocristallin de l'aube ; et dans laquelle les valeurs d'orientation cristalline de premières aubes (11, ... 14) sont inférieures à une première valeur limite et les valeurs d'orientation cristalline de deuxièmes aubes (21, ... 25 ; 31, ... 37) sont au moins égales à la première valeur limite ;
**caractérisée en ce que**
la grille d'aube présente au moins un premier secteur (1), qui se compose d'au moins trois premières aubes successives (14, 12, 11, 13), et
au moins un deuxième secteur (2+3 ; 2'+3' ; 2"+3"), qui se compose d'au moins trois deuxièmes aubes successives (22, 21, 23, 24, 25 ; 31, 34, 36, 37, 33, 32, 35),
dans laquelle les valeurs d'orientation cristalline des aubes d'un secteur sont agencées de manière régulière, à savoir dans un ordre monotone.

2. Grille d'aube selon la revendication 1, **caractérisée en ce que** la grille d'aube se compose d'un, deux ou trois premier(s) secteur(s) et d'un, deux ou trois deuxième(s) secteur(s).

3. Grille d'aube selon la revendication 1, **caractérisée en ce que** les valeurs d'orientation cristalline de premières deuxièmes aubes (21, ... 25) sont inférieures à une deuxième valeur limite et les valeurs d'orientation cristalline de deuxièmes deuxièmes aubes (31, ... 37) sont au moins égales à la deuxième valeur limite ; et **en ce que** la grille d'aube présente au moins un premier deuxième secteur (2 ; 2' ; 2"), qui se compose d'au moins trois premières deuxièmes aubes successives (22, 21, 23, 24, 25) et au moins un deuxième deuxième secteur (3 ; 3' ; 3") qui se compose d'au moins trois deuxièmes deuxièmes aubes successives (31, 34, 36, 37, 33, 32, 35).

4. Grille d'aube selon la revendication précédente, **caractérisée en ce que** la grille d'aube se compose d'un, deux ou trois premier(s) secteur(s), d'un, deux ou trois premier(s) deuxième(s) secteur(s) et d'un, deux ou trois deuxième(s) deuxième(s) secteur(s).

5. Grille d'aube selon l'une quelconque des revendications précédentes, **caractérisée en ce qu'**une valeur limite s'élève à au moins 10 %, en particulier au moins 25 % et/ou au maximum 90 %, en particulier au maximum 75 % d'une valeur d'orientation cristalline maximum de la grille d'aube.

6. Grille d'aube selon l'une quelconque des revendications précédentes, **caractérisée en ce que** les aubes d'un secteur forment au moins 20 %, en particulier au moins 35 %, et/ou au maximum 80 %, en particulier au maximum 65 % du nombre d'aubes de la grille d'aube.

7. Grille d'aube selon l'une quelconque des revendications précédentes, **caractérisée en ce que** l'orientation cristalline du matériau monocristallin dépend d'un écart d'une direction cristalline, en particulier de la direction [001] ou de la direction [100], du matériau monocristallin d'une direction de profil, en particulier d'un axe d'empilage ou d'une corde, d'une pale d'aube de l'aube.

8. Turbomaschine, en particulier turbine à gaz, avec au moins une grille d'aube, en particulier une grille mobile ou directrice d'un étage turbine ou compresseur, selon l'une quelconque des revendications précédentes

9. Procédé de fabrication d'une grille d'aube selon l'une quelconque des revendications précédentes, avec les étapes de :
tri d'aubes en fonction de leur orientation cristalline ; et
agencement des aubes triées en secteurs en fonction de leurs valeurs d'orientation cristalline,
dans lequel les valeurs d'orientation cristalline des aubes d'un secteur sont agencées de manière régulière, à savoir dans un ordre monotone.
